(19) Europäisches Patentamt / European Patent Office / Office européen des brevets

(11) **EP 4 378 989 A1**

(12) **EUROPEAN PATENT APPLICATION**
published in accordance with Art. 153(4) EPC

(43) Date of publication:
**05.06.2024 Bulletin 2024/23**

(21) Application number: **22849170.0**

(22) Date of filing: **04.07.2022**

(51) International Patent Classification (IPC):
$C08L\ 9/00\ ^{(2006.01)}$ $B60C\ 1/00\ ^{(2006.01)}$
$C08K\ 3/04\ ^{(2006.01)}$ $C08L\ 7/00\ ^{(2006.01)}$
$C08L\ 15/00\ ^{(2006.01)}$

(52) Cooperative Patent Classification (CPC):
**B60C 1/00; C08K 3/04; C08L 7/00; C08L 9/00;
C08L 15/00;** Y02T 10/86

(86) International application number:
**PCT/JP2022/026637**

(87) International publication number:
**WO 2023/008105 (02.02.2023 Gazette 2023/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.07.2021 JP 2021126146**

(71) Applicant: **BRIDGESTONE CORPORATION**
**Chuo-ku**
**Tokyo 104-8340 (JP)**

(72) Inventors:
• **MIYAUCHI, Hideki**
**Tokyo 104-8340 (JP)**
• **TAKAHASHI, Yuki**
**Tokyo 104-8340 (JP)**

(74) Representative: **Marks & Clerk LLP**
**15 Fetter Lane**
**London EC4A 1BW (GB)**

(54) **RUBBER COMPOSITION FOR TIRE TREAD AND TIRE**

(57)     Provided is a rubber composition for a tire tread that can cause a tire to display excellent wear resistance when used in a tread. The rubber composition for a tire tread contains a rubber component and carbon black. The rubber component includes modified butadiene rubber in a proportion of 5 mass% or more and unmodified butadiene rubber in a proportion of 10 mass% or more. The carbon black has a cetyltrimethylammonium bromide adsorption specific surface area (CTAB) of 130 $m^2$/g or more, a ratio (CTAB/IA) of CTAB ($m^2$/g) relative to iodine adsorption number (IA) (mg/g) of not less than 0.92 and not more than 1.06, and hydrogen evolution of not less than 3,500 mass ppm and not more than 4,800 mass ppm.

**EP 4 378 989 A1**

**Description**

TECHNICAL FIELD

The present disclosure relates to a rubber composition for a tire tread and also relates to a tire.

BACKGROUND

Wear resistance, in particular, is required in treads of tires, and there is ongoing optimization of materials used in tread production to achieve performance enhancement.

For example, Patent Literature (PTL) 1 discloses that a pneumatic tire excelling in terms of both wear resistance and low rolling resistance is obtained by using, in a tread, a rubber composition in which a butadiene polymer that has a comparatively high cis content and that is modified with a specific modifying agent is combined with carbon black having a nitrogen adsorption specific surface area of more than 100 m$^2$/g.

CITATION LIST

Patent Literature

PTL 1: JP2011-219612A

SUMMARY

(Technical Problem)

However, there is room for improvement of the rubber composition described in PTL 1 in terms of further improving wear resistance.

Accordingly, the present disclosure addresses a problem of providing a rubber composition for a tire tread that can cause a tire to display excellent wear resistance when used in a tread.

The present disclosure also addresses a problem of proving a tire having excellent wear resistance.

(Solution to Problem)

As a result of diligent studies to solve the problems set forth above, the inventors discovered that a rubber composition capable of improving wear resistance is obtained by using carbon black having specific physical properties and by also using specific amounts of modified butadiene rubber and unmodified butadiene rubber together as a rubber component, thereby leading to the present disclosure.

Primary features of the present disclosure for resolving the problems set forth above are as follows.

A rubber composition for a tire tread according to the present disclosure comprises a rubber component and carbon black, wherein

the rubber component includes modified butadiene rubber in a proportion of 5 mass% or more and unmodified butadiene rubber in a proportion of 10 mass% or more, and

the carbon black has a cetyltrimethylammonium bromide adsorption specific surface area (CTAB) of 130 m$^2$/g or more, a ratio (CTAB/IA) of CTAB, in units of m$^2$/g, relative to iodine adsorption number (IA), in units of mg/g, of not less than 0.92 and not more than 1.06, and hydrogen evolution of not less than 3,500 mass ppm and not more than 4,800 mass ppm.

A tire according to the present disclosure comprises a tread in which the rubber composition for a tire tread set forth above is used.

(Advantageous Effect)

According to the present disclosure, it is possible to provide a rubber composition for a tire tread that can cause a tire to display excellent wear resistance when used in a tread.

Moreover, according to the present disclosure, it is possible to provide a tire having excellent wear resistance.

DETAILED DESCRIPTION

The following describes embodiments of the present disclosure. However, the following description is intended for illustrative purposes only and is not intended to limit the scope of the present disclosure in any way.

Compounds described in the present specification may be partially or fully derived from fossil resources, biological resources such as plant resources, or recycled resources such as used tires. Moreover, these compounds may be derived from a mixture of two or more from among fossil resources, biological resources, and recycled resources.

(Rubber composition for tire tread)

A rubber composition for a tire tread according to one embodiment of the present disclosure (hereinafter, also referred to as the "rubber composition of the present embodiment") contains a rubber component and carbon black. The rubber component is required to include modified butadiene rubber in a proportion of 5 mass% or more and unmodified butadiene rubber in a proportion of 10 mass% or more. The carbon black used in the present embodiment is required to have a cetyltrimethylammonium bromide adsorption specific surface area (CTAB) of 130 $m^2/g$ or more as a first physical property, a ratio (CTAB/IA) of CTAB ($m^2/g$) relative to iodine adsorption number (IA) (mg/g) of not less than 0.92 and not more than 1.06 as a second physical property, and hydrogen evolution of not less than 3,500 mass ppm and not more than 4,800 mass ppm as a third physical property. Note that carbon black having all of these physical properties together is substantially novel.

<Rubber component>

The rubber composition of the present embodiment contains modified butadiene rubber (also referred to as modified BR) and unmodified butadiene rubber (also referred to as unmodified BR or simply BR) as the essential rubber component as previously described. It was unexpectedly found that when specific amounts of modified butadiene rubber and unmodified butadiene rubber are used together as a rubber component in combination with carbon black having specific physical properties described below in the present embodiment, the resultant rubber composition can display excellent wear resistance. With regards to this point, modified butadiene rubber chemically bonds with carbon black and thereby displays excellent reinforcing ability and improves wear resistance but, on the other hand, can cause deterioration of dispersibility of a filler having a size of the order of micrometers. This deterioration of filler dispersibility can have a negative effect on wear resistance. The combined use of unmodified butadiene rubber in response thereto is thought to improve filler dispersibility, enable a balance of high levels of reinforcing ability and filler dispersibility, and, as a result, cause the display of excellent wear resistance. Hence, an adequate wear resistance improvement effect cannot be achieved in a case in which modified butadiene rubber is used without using unmodified butadiene rubber or in a case in which unmodified butadiene rubber is used without using modified butadiene rubber.

The modified butadiene rubber is butadiene rubber including at least one type of functional group that includes an atom other than carbon and hydrogen. The modified butadiene rubber may include this functional group at an end thereof or in a main chain thereof. Moreover, the modified butadiene rubber can be obtained by modifying butadiene rubber (unmodified butadiene rubber) with a modifying agent, for example.

The atom other than carbon and hydrogen may be a nitrogen atom, an oxygen atom, a sulfur atom, a metalloid atom, a metal atom, or the like. The functional group preferably includes one or more types of atoms selected from among these atoms. Moreover, the metalloid atom may be boron, silicon, germanium, arsenic, antimony, tellurium, or the like. Of these metalloid atoms, one or more types of atoms selected from boron, silicon, and germanium are more preferable, and silicon is particularly preferable. Furthermore, the metal atom may be tin, titanium, zirconium, bismuth, aluminum, or the like. Of these metal atoms, one or more types of atoms selected from tin and titanium are more preferable, and tin is particularly preferable.

In the rubber composition of the present embodiment, the proportion constituted by the modified butadiene rubber among the rubber component is 5 mass% or more. In a situation in which the proportion constituted by the modified butadiene rubber among the rubber component is less than 5 mass%, the effect of combined use with unmodified butadiene rubber and the effect of wear resistance improvement cannot adequately be achieved. Moreover, the proportion constituted by the modified butadiene rubber among the rubber component is preferably 15 mass% or more, and more preferably 20 mass% or more from a viewpoint of further improving wear resistance. On the other hand, although no specific limitations are placed on the upper limit for the proportion constituted by the modified butadiene rubber among the rubber component, the proportion constituted by the modified butadiene rubber among the rubber component is preferably 30 mass% or less from viewpoints of cost, operability during rubber kneading, and so forth.

In the present embodiment, unmodified butadiene rubber is used in addition to the modified butadiene rubber described above. One type of unmodified butadiene rubber may be used individually, or two or more types of unmodified butadiene rubber may be used in combination.

In the rubber composition of the present embodiment, the proportion constituted by the unmodified butadiene rubber among the rubber component is 10 mass% or more. In a situation in which the proportion constituted by the unmodified butadiene rubber among the rubber component is less than 10 mass%, the effect of combined use with modified butadiene rubber and the effect of wear resistance improvement cannot adequately be achieved. Moreover, although no specific limitations are placed on the upper limit for the proportion constituted by the unmodified butadiene rubber, this proportion is preferably 30 mass% or less, and more preferably 20 mass% or less from a viewpoint of further improving wear resistance.

The proportion constituted by the modified butadiene rubber among the total of the modified butadiene rubber and the unmodified butadiene rubber in the rubber composition of the present embodiment is preferably not less than 20 mass% and not more than 80 mass%. In this case, the wear resistance improvement effect that is characteristic of the present disclosure can be more adequately achieved. From the same viewpoint, the proportion constituted by the modified butadiene rubber among the total of the modified butadiene rubber and the unmodified butadiene rubber is preferably 45 mass% or more, more preferably 60 mass% or more, and even more preferably 70 mass% or more.

The rubber composition of the present embodiment preferably further contains natural rubber (NR) in addition to the modified butadiene rubber and unmodified butadiene rubber described above. In other words, the rubber component that is used in the present embodiment preferably further includes natural rubber. In this case, it is possible to increase mechanical strength as a rubber article.

The proportion constituted by the natural rubber among the rubber component in the rubber composition of the present embodiment is preferably not less than 30 mass% and not more than 70 mass%. When the proportion constituted by the natural rubber among the rubber component is 30 mass% or more, mechanical strength can sufficiently be increased. Moreover, when the proportion constituted by the natural rubber among the rubber component is 70 mass% or less, the effect of using modified butadiene rubber and unmodified butadiene rubber together can sufficiently be displayed, and the wear resistance improvement effect that is characteristic of the present disclosure can be achieved more reliably.

The rubber composition of the present embodiment may or may not contain another rubber component besides the modified butadiene rubber, unmodified butadiene rubber, and natural rubber described above. The other rubber component may be isoprene rubber (IR), styrene-butadiene rubber (SBR), acrylonitrile-butadiene rubber (NBR), chloroprene rubber, ethylenepropylene rubber (EPM), ethylene propylene diene rubber (EPDM), polysulfide rubber, silicone rubber, fluororubber, urethane rubber, or the like, for example. One of these other rubber components may be used individually, or two or more of these other rubber components may be used in combination. However, the proportion constituted by the other rubber components described above among the rubber component in the rubber composition of the present embodiment is preferably 20 mass% or less, more preferably 10 mass% or less, even more preferably 5 mass% or less, and particularly preferably 0 mass% (i.e., it is particularly preferable that other rubber components are not included).

<Carbon black>

The carbon black that is used in the present embodiment is required to have a cetyltrimethylammonium bromide adsorption specific surface area (CTAB) of 130 m$^2$/g or more as a first physical property. As a result of CTAB of the carbon black being 130 m$^2$/g or more, the carbon black can increase reinforcing ability of the modified butadiene rubber and/or unmodified butadiene rubber that is mixed as the rubber component and can also contribute to improving wear resistance. Moreover, CTAB of the carbon black is preferably 135 m$^2$/g or more from a viewpoint of further improving wear resistance, and is preferably 150 m$^2$/g or less from a viewpoint of maintaining good performance in terms of other aspects such as low loss property and processability.

Note that CTAB of the carbon black is measured in accordance with JIS K6217-3. Moreover, adjustment of CTAB of the carbon black can be performed through control of various conditions in production of the carbon black such as raw material feeding conditions, air feeding conditions, fuel feeding conditions, and cooling water feeding conditions, for example, without any limitations.

The carbon black preferably has an iodine adsorption number (IA) of 150 mg/g or less. When IA of the carbon black is 150 mg/g or less, specific activation of the surface of the carbon black is suitably performed, and interactivity with the modified butadiene rubber and/or unmodified butadiene rubber that is mixed as the rubber component can be increased well. Moreover, IA of the carbon black is preferably 130 mg/g or more from a viewpoint of maintaining good performance in terms of other aspects such as low loss property and processability.

Note that IA of the carbon black is measured in accordance with JIS K6217-1. Moreover, adjustment of IA of the carbon black can be performed through control of various conditions in production of the carbon black such as raw material feeding conditions, air feeding conditions, fuel feeding conditions, and cooling water feeding conditions, for example, without any limitations.

The carbon black is also required to have a ratio (CTAB/IA) of CTAB (m$^2$/g) relative to iodine adsorption number (IA) (mg/g) of not less than 0.92 and not more than 1.06 as a second physical property. Wear resistance may deteriorate in a situation in which CTAB/IA is less than 0.92. Moreover, processability may deteriorate and wear resistance may deteriorate in a situation in which CTAB/IA is more than 1.06. Furthermore, from a viewpoint of further improving wear resistance, CTAB/IA of the carbon black is preferably 0.95 or more, and is preferably 1.05 or less.

The carbon black is also required to have hydrogen evolution of not less than 3,500 mass ppm and not more than 4,800 mass ppm as a third physical property. In a situation in which the hydrogen evolution is less than 3,500 mass ppm, specific activation of the surface of the carbon black and interactivity with the modified butadiene rubber and/or unmodified butadiene rubber that is mixed as the rubber component may be inadequate, and, as a result, wear resistance may deteriorate. Moreover, wear resistance may deteriorate due to excessive hydrogen in a situation in which the hydrogen evolution is more than 4,800 mass ppm. Furthermore, from a viewpoint of further improving wear resistance, the hydrogen evolution of the carbon black is preferably 3,700 mass ppm or more, and is preferably 4,500 mass ppm or less, and more preferably 4,300 mass ppm or less.

Note that the hydrogen evolution of the carbon black refers to the amount of hydrogen gas evolved during 15 minutes of heating at 2000°C in an argon atmosphere and is measured using a hydrogen analyzer. Moreover, adjustment of the hydrogen evolution of the carbon black can be performed through control of various conditions in production of the carbon black such as raw material feeding conditions, air feeding conditions, fuel feeding conditions, and cooling water feeding conditions, for example, without any limitations.

The carbon black preferably has a dibutyl phthalate oil absorption (DBP) of not less than 130 $cm^3$/100 g and not more than 150 $cm^3$/100 g. Wear resistance further improves when DBP is 130 $cm^3$/100 g or more, whereas good processability can be maintained when DBP is 150 $cm^3$/100 g or less.

No specific limitations are placed on the method by which the carbon black is produced so long as it can be provided with the desired physical properties. However, physical properties of the carbon black such as CTAB, IA, and hydrogen evolution described above are extremely difficult to adjust individually. Carbon black that can be used in the present embodiment can be produced, for example, in accordance with production conditions in Table 1 for the subsequently described Examples.

The content of the carbon black in the rubber composition of the present embodiment is preferably not less than 40 parts by mass and not more than 70 parts by mass relative to 100 parts by mass of the rubber component. When the content of the carbon black is 40 parts by mass or more, interactivity with the modified butadiene rubber and/or unmodified butadiene rubber that is mixed as the rubber component sufficiently increases, and wear resistance can effectively be improved. Moreover, when the content of the carbon black is 70 parts by mass or less, good performance in terms of other aspects such as low loss property and processability can be maintained. From the same viewpoints, the content of the carbon black in the rubber composition is more preferably 45 parts by mass or more relative to 100 parts by mass of the rubber component, and is more preferably 60 parts by mass or less relative to 100 parts by mass of the rubber component.

The rubber composition of the present embodiment may or may not contain other carbon black besides the carbon black having the physical properties described above. The other carbon black may be carbon black that only satisfies two of the first physical property, the second physical property, and the third physical property described above, carbon black that only satisfies one of the first physical property, the second physical property, and the third physical property described above, or carbon black that does not satisfy any of the first physical property, the second physical property, and the third physical property described above. However, from a viewpoint of more reliably achieving the wear resistance improvement effect that is characteristic of the present disclosure, the proportion constituted by other carbon black among all carbon black in the rubber composition of the present embodiment is preferably 20 mass% or less, more preferably 10 mass% or less, even more preferably 5 mass% or less, and particularly preferably 0 mass% (i.e., it is particularly preferable that other carbon black is not included).

<Other components>

The rubber composition of the present embodiment may contain a filler other than carbon black. The filler other than carbon black may be silica, aluminum hydroxide, clay, alumina, talc, mica, kaolin, glass balloon, glass beads, calcium carbonate, magnesium carbonate, magnesium hydroxide, magnesium oxide, titanium oxide, potassium titanate, barium sulfate, or the like, for example. However, from a viewpoint of more reliably achieving the wear resistance improvement effect that is characteristic of the present disclosure, it is preferable that the rubber composition of the present embodiment does not contain a filler other than carbon black.

Moreover, the rubber composition of the present embodiment may contain compounding agents typically used in the rubber industry that are selected as appropriate so as to not deviate from the object of the present disclosure. Examples of such compounding agents include crosslinking agents (vulcanization agents) such as sulfur, crosslinking accelerators (vulcanization accelerators), process oil, anti-scorch agents, zinc oxide, and stearic acid. Commercial products can suitably be used as these compounding agents.

Furthermore, the rubber composition can be produced by compounding the carbon black and various compounding agents that are appropriately selected as necessary with the rubber component and performing kneading, warming, extrusion, etc. thereof.

A commonly known method can be adopted as the production method of the rubber composition of the present embodiment without any specific limitations. For example, the rubber composition may be obtained by kneading components including the specific rubber component and carbon black using a kneading machine such as a Banbury mixer, a roller, or an internal mixer. Moreover, the rubber composition may be produced by mixing components other than a crosslinking accelerator and a crosslinking agent at a nonproductive stage and then compounding and mixing the crosslinking accelerator and the crosslinking agent with this mixture at a productive stage.

The rubber composition of the present embodiment can be crosslinked or vulcanized. The conditions under which the rubber composition is crosslinked or vulcanized should be adjusted as appropriate and can, for example, be set as a temperature of 120°C to 200°C and a heating time of 1 minute to 900 minutes.

(Tire)

A feature of a tire according to one embodiment of the present disclosure is that it includes a tread in which the rubber composition of the present embodiment is used. This tire has excellent wear resistance as a result of the tread being produced from the rubber composition of the present embodiment.

A commonly known method can be adopted as the method by which the tire is produced without any specific limitations so long as the rubber composition of the present embodiment is used in the tread.

EXAMPLES

The following describes the present disclosure in more detail through Examples. However, these Examples are for illustrative purposes and are not intended to limit the scope of the present disclosure in any way.

(Production of carbon black)

Carbon black CB1 to CB8 were produced. Note that the physical properties of each carbon black were controlled by altering various conditions (raw material feed rate, air feed rate, temperature, pressure, reaction time, etc.) as indicated in Table 1.

[Table 1]

| | | | CB1 | CB2 | CB3 | CB4 | CB5 | CB6 | CB7 | CB8 |
|---|---|---|---|---|---|---|---|---|---|---|
| Raw material feeding conditions | | | | | | | | | | |
| | Feeding rate | kg/h | 480 | 450 | 450 | 435 | 435 | 440 | 455 | 450 |
| | Spraying pressure | Mpa | 2.2 | 2.0 | 2.0 | 2.0 | 2.0 | 2.0 | 2.1 | 2.0 |
| | Preheating temperature | °C | 150 | 170 | 170 | 170 | 170 | 170 | 170 | 170 |
| Air feeding conditions | | | | | | | | | | |
| | Feeding rate | l/h | 3300 | 3300 | 3300 | 3300 | 3300 | 3300 | 3300 | 3300 |
| | Preheating temperature | °C | 550 | 600 | 600 | 600 | 600 | 600 | 600 | 600 |
| | Fuel feeding rate | kg/h | 135 | 135 | 135 | 135 | 135 | 135 | 135 | 135 |
| Cooling water feeding conditions | | | | | | | | | | |
| | Reaction time | msec | 55 | 22 | 58 | 87 | 30 | 61 | 40 | 20 |

For each of the produced CB1 to CB8, the cetyltrimethylammonium bromide adsorption specific surface area (CTAB) $[m^2/g]$ was measured in accordance with JIS K6217-3, and the iodine adsorption number (IA) [mg/g] was measured in accordance with JIS K6217-1. Moreover, for each of the produced CB1 to CB8, the amount of hydrogen gas evolved (hydrogen evolution) during 15 minutes of heating at 2000°C in an argon atmosphere was measured using a hydrogen analyzer (EMGA produced by Horiba, Ltd.). The results are shown in Table 2 together with calculated values for CTAB/IA.

[Table 2]

|  |  | CB1 | CB2 | CB3 | CB4 | CB5 | CB6 | CB7 | CB8 |
|---|---|---|---|---|---|---|---|---|---|
| DBP | [cm3/100 g] | 125 | 143 | 133 | 146 | 136 | 145 | 143 | 139 |
| CTAB | [m/g] | 124 | 137 | 138 | 143 | 141 | 139 | 139 | 140 |
| IA | [mg/g] | 124 | 124 | 148 | 168 | 140 | 144 | 132 | 136 |
| Hydrogen evolution | [mass ppm] | 3670 | 4890 | 3070 | 1900 | 3920 | 3796 | 3957 | 4536 |
| CTAB/IA |  | 1.00 | 1.10 | 0.93 | 0.85 | 1.01 | 0.97 | 1.05 | 1.03 |

(Production of modified butadiene rubber (HMI-BR))

A pressure-resistant glass vessel of approximately 900 mL that had undergone drying and purging with nitrogen was charged with 283 g of cyclohexane, 50 g of 1,3-butadiene, 0.0057 mmol of 2,2-ditetrahydrofurylpropane, and 0.513 mmol of hexamethyleneimine (HMI-BR). After further adding 0.57 mmol of n-butyllithium (BuLi), polymerization was performed for 4.5 hours in a warm water bath of 50°C that was equipped with a stirring device. The polymerization conversion rate in this polymerization was almost 100%. Next, 0.100 mmol of tin tetrachloride as a modifying agent (coupling agent) was quickly added to the polymerization reaction system, and a modification reaction was performed under stirring at 50°C for 30 minutes. Thereafter, 0.5 mL of an isopropanol solution of 2,6-di-t-butyl-p-cresol (BHT) (BHT concentration: 5 mass%) was added to the polymerization reaction system, the reaction was ended, and drying was performed by a standard method to yield modified butadiene rubber (HMI-BR) containing tin atoms. The vinyl bond content of a butadiene portion of the obtained HMI-BR was 14% as measured from an integral ratio in a $^1$H-NMR spectrum, the glasstransition temperature (Tg) of the obtained HMI-BR was -95°C as determined from an inflection point of a DSC curve, and the coupling ratio of the obtained HMI-BR was 65% as determined from a proportion of the area of a peak at a highest molecular weight side relative to total area of a molecular weight distribution curve according to gel permeation chromatography (GPC).

(Production of rubber compositions)

Next, rubber compositions were produced by performing thorough kneading in formulations indicated in Table 3. The obtained rubber compositions were used to evaluate wear resistance according to the following procedure.

<Wear resistance (laboratory test)>

An index evaluation of wear resistance (laboratory test) in each example was made based on carbon gel content and filler dispersibility, which are considered to have high correlation with wear resistance.

(1) Calculation of carbon gel content

A rubber composition in an unvulcanized state that was produced in each example was cut to a small size to obtain a test specimen, and the mass (M0) of this test specimen was measured. The test specimen was immersed in tetrahydrofuran for 48 hours, was then subjected to filtration and drying using a filter, and the mass (M1) of residue was measured. The "carbon gel content" in each example was calculated by the following formula. A larger carbon gel content indicates better reinforcing ability and is considered to signify a high wear resistance effect.

$$\text{Carbon gel content} = \{(M1) - (M0) \times (C1 \div C0)\}/\{(M0) \times (C2 \div C0)\}$$

M0: Mass of test specimen (pre-immersion)
M1: Mass of residue
C0: Total number of parts of rubber composition
C1: Total number of parts of carbon black, zinc oxide, and sulfur in rubber composition
C2: Total number of parts of rubber component in rubber composition

(2) Measurement of filler dispersibility

Separately to the above, a rubber composition produced in each example was vulcanized at 145°C for 33 minutes to yield vulcanized rubber. A Y value according to the RCB method was measured for the obtained vulcanized rubber using a Dispergrader (produced by TechPro USA). A larger value indicates better filler dispersibility and is considered to signify a high wear resistance effect.

(3) Evaluation of wear resistance (laboratory test)

The carbon gel content and filler dispersibility calculated as described above were used to make an index evaluation of wear resistance (laboratory test) in each example. The results are shown in Table 3. Since improvement of reinforcing ability and filler dispersibility result in better wear resistance, a larger index value indicates better wear resistance.

<Wear resistance (field test)>

Rubber compositions produced in Example 1, Comparative Example 1, and Comparative Example 2 were each used in a tread member and were appropriately vulcanized to produce a truck/bus pneumatic tire of size 275/80R22.5. The obtained tire was mounted on a drive wheel of a truck and was run for at least 14,000 km on public roads. The amount of wear after this running was measured from the change of main groove depth of the tire. In the case of other Examples and Comparative Examples, a prediction was made based on measurement results for Example 1, Comparative Example 1, and Comparative Example 2 and evaluation results of wear resistance according to the laboratory test in each example. An index evaluation of wear resistance in each example was made by taking the reciprocal of the amount of wear in Comparative Example 6 to be 100. The results are shown in Table 3. A larger index value indicates better wear resistance.

[Table 3]

| | | | Example 1 | Example 2 | Example 3 | Comparative Example 1 | Comparative Example 2 | Comparative Example 3 | Comparative Example 4 | Comparative Example 5 | Comparative Example 6 | Example 4 | Example 5 | Example 6 | Comparative Example 7 |
|---|---|---|---|---|---|---|---|---|---|---|---|---|---|---|---|
| Formulation | NR *1 | [parts by mass] | 60 | 60 | 60 | 60 | 60 | 60 | 60 | 60 | 60 | 60 | 60 | 60 | 60 |
| | Modified BR *2 | | 10 | 20 | 30 | 0 | 40 | 10 | 10 | 0 | 10 | | 10 | 10 | 0 |
| | Unmodified BR *3 | | 30 | 20 | 10 | 40 | 0 | 30 | 30 | 40 | 30 | 30 | 30 | 30 | 40 |
| | CB1 | | 0 | 0 | 0 | 0 | 0 | 50 | 0 | 0 | 0 | 0 | 0 | 0 | 50 |
| | CB2 | | 0 | 0 | 0 | 0 | 0 | 0 | 50 | 0 | 0 | 0 | 0 | 0 | 0 |
| | CB3 | | 0 | 0 | 0 | 0 | 0 | 0 | 0 | 50 | 0 | 0 | 0 | 0 | 0 |
| | CB4 | | 0 | 0 | 0 | 0 | 0 | 0 | 0 | 0 | 50 | 0 | 0 | 0 | 0 |
| | CB5 | | 50 | 50 | 50 | 50 | 50 | 0 | 0 | 0 | 0 | 0 | 0 | 0 | 0 |
| | CB6 | | 0 | 0 | 0 | 0 | 0 | 0 | 0 | 0 | 0 | 50 | 0 | 0 | 0 |
| | CB7 | | 0 | 0 | 0 | 0 | 0 | 0 | 0 | 0 | 0 | 0 | 50 | 0 | 0 |
| | CB8 | | 0 | 0 | 0 | 0 | | 0 | 0 | 0 | 0 | 0 | 0 | 50 | 0 |
| | Zinc oxide | | 3.5 | 3.5 | 3.5 | 3.5 | 0 3.5 | 3.5 | 3.5 | 3.5 | 3.5 | 3.5 | 3.5 | 3.5 | 3.5 |
| | Sulfur | | 1.05 | 1.05 | 1.05 | 1.05 | 1.05 | 1.1 | 1.05 | 1.05 | 1.05 | 1.05 | 1.05 | 1.05 | 1.05 |
| | Vulcanization accelerator CZ *4 | | 1.4 | 1.4 | 1.4 | 1.4 | 1.4 | 1.5 | 1.4 | 1.4 | 1.4 | 1.4 | 1.4 | 1.4 | 1.4 |

(continued)

| | | Example 1 | Example 2 | Example 3 | Comparative Example 1 | Comparative Example 2 | Comparative Example 3 | Comparative Example 4 | Comparative Example 5 | Comparative Example 6 | Example 4 | Example 5 | Example 6 | Comparative Example 7 |
|---|---|---|---|---|---|---|---|---|---|---|---|---|---|---|
| Evaluation | Wear resistance (laboratory test) Index value | 100.2 | 101.4 | 101.7 | 99.0 | 99.0 | 97.9 | 96.2 | 96.8 | 100.0 | 109.5 | 109.2 | 100.4 | 96.9 |
| | Wear resistance (field test) Index value | 101 | 108*5 | 109*5 | 95 | 96 | 89*5 | 79*5 | 82*5 | 100*5 | 152*5 | 150*5 | 102*5 | 83*5 |

*1 NR: TSR#20
*2 Modified BR: Produced modified butadiene rubber (HMI-BR)
*3 Unmodified BR: UBEPOL BR150L produced by Ube Industries, Ltd.
*4 Vulcanization accelerator CZ: N-Cyclohexyl-2-benzothiazylsulfenamide, NOCCELER CZ produced by Ouchi Shinko Chemical Industrial Co., Ltd.
*5 Value predicted from evaluation result for wear resistance according to laboratory test

It can be seen from Tables 1 to 3 that the rubber compositions of the Examples conforming with the present disclosure have good evaluation results for wear resistance according to both the laboratory test and the field test as compared to rubber compositions of the Comparative Examples.

INDUSTRIAL APPLICABILITY

According to the present disclosure, it is possible to provide a rubber composition for a tire tread that can cause a tire to display excellent wear resistance when used in a tread.

Moreover, according to the present disclosure, it is possible to provide a tire having excellent wear resistance.

**Claims**

1.  A rubber composition for a tire tread comprising a rubber component and carbon black, wherein

    the rubber component includes modified butadiene rubber in a proportion of 5 mass% or more and unmodified butadiene rubber in a proportion of 10 mass% or more, and
    the carbon black has a cetyltrimethylammonium bromide adsorption specific surface area (CTAB) of 130 m$^2$/g or more, a ratio (CTAB/IA) of CTAB, in units of m$^2$/g, relative to iodine adsorption number (IA), in units of mg/g, of not less than 0.92 and not more than 1.06, and hydrogen evolution of not less than 3,500 mass ppm and not more than 4,800 mass ppm.

2.  The rubber composition for a tire tread according to claim 1, wherein the rubber component includes the modified butadiene rubber in a proportion of 30 mass% or less.

3.  The rubber composition for a tire tread according to claim 1 or 2, wherein CTAB of the carbon black is not less than 135 m$^2$/g and not more than 150 m$^2$/g.

4.  The rubber composition for a tire tread according to any one of claims 1 to 3, wherein content of the carbon black is not less than 40 parts by mass and not more than 70 parts by mass relative to 100 parts by mass of the rubber component.

5.  The rubber composition for a tire tread according to any one of claims 1 to 4, wherein the rubber component further includes natural rubber.

6.  A tire comprising a tread in which the rubber composition for a tire tread according to any one of claims 1 to 5 is used.

## INTERNATIONAL SEARCH REPORT

| International application No. |
|---|
| **PCT/JP2022/026637** |

**A.    CLASSIFICATION OF SUBJECT MATTER**

*C08L 9/00*(2006.01)i; *B60C 1/00*(2006.01)i; *C08K 3/04*(2006.01)i; *C08L 7/00*(2006.01)i; *C08L 15/00*(2006.01)i
FI:    C08L9/00; C08L15/00; C08L7/00; C08K3/04; B60C1/00 A

According to International Patent Classification (IPC) or to both national classification and IPC

**B.    FIELDS SEARCHED**

Minimum documentation searched (classification system followed by classification symbols)

C08L9/00; B60C1/00; C08K3/04; C08L7/00; C08L15/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | WO 2014/181776 A1 (BRIDGESTONE CORPORATION) 13 November 2014 (2014-11-13) | 1-6 |
| A | WO 2014/189102 A1 (BRIDGESTONE CORPORATION) 27 November 2014 (2014-11-27) | 1-6 |
| A | WO 2019/240226 A1 (BRIDGESTONE CORPORATION) 19 December 2019 (2019-12-19) | 1-6 |
| A | JP 2015-900 A (SUMITOMO RUBBER INDUSTRIES, LTD.) 05 January 2015 (2015-01-05) | 1-6 |
| A | WO 2010/038768 A1 (BRIDGESTONE CORPORATION) 08 April 2010 (2010-04-08) | 1-6 |

☐ Further documents are listed in the continuation of Box C.        ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **05 August 2022** | **06 September 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

| International application No. |
|---|
| **PCT/JP2022/026637** |

| Patent document cited in search report | | | Publication date (day/month/year) | Patent family member(s) | | | Publication date (day/month/year) |
|---|---|---|---|---|---|---|---|
| WO | 2014/181776 | A1 | 13 November 2014 | US | 2016/0053098 | A1 | |
| | | | | EP | 2995645 | A1 | |
| | | | | CN | 105189635 | A | |
| WO | 2014/189102 | A1 | 27 November 2014 | US | 2016/0130417 | A1 | |
| | | | | EP | 3006495 | A1 | |
| | | | | CN | 105246965 | A | |
| WO | 2019/240226 | A1 | 19 December 2019 | (Family: none) | | | |
| JP | 2015-900 | A | 05 January 2015 | US | 2016/0083553 | A1 | |
| | | | | EP | 2998351 | A1 | |
| | | | | CN | 105308112 | A | |
| WO | 2010/038768 | A1 | 08 April 2010 | US | 2011/0224364 | A1 | |
| | | | | EP | 2348068 | A1 | |
| | | | | CN | 102171285 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011219612 A